(19) Europäisches Patentamt
European Patent Office
Office européen des brevets

(11) Publication number : **0 084 782 B2**

(12) **NEW EUROPEAN PATENT SPECIFICATION**

(45) Date of publication of the new patent specification : **28.03.90**

(51) Int. Cl.[5] : **C 09 D 5/16**, C 09 D133/06, C 08 L 33/06

(21) Application number : **83100105.2**

(22) Date of filing : **07.01.83**

# (54) Antifouling coating composition.

(30) Priority : **12.01.82 JP 3076/82**

(43) Date of publication of application : **03.08.83 Bulletin 83/31**

(45) Publication of the grant of the patent : **17.09.86 Bulletin 86/38**

(45) Mention of the opposition decision : **28.03.90 Bulletin 90/13**

(84) Designated contracting states : **DE FR GB**

(56) References cited :
**EP–A– 0 003 389**
**FR–A– 2 227 304**
**GB–A– 1 303 178**
**US–A– 3 792 000**
**Chemical Abstract 92, 148601 (1980)**
**Chemical Abstract 94, 5036 (1981)**
**Chemical Abstract 95, 152312 (1981)**
**Chemical Abstract 96, 124783 (1982)**
**Houben-Weyl, Methoden der organischen Chemie, 14 (1961), page 1046**
**Rauch / Völker "Acryl- und Methacrylverbindungen",(1967), page 303**
**The file contains technical information submitted after the application was filed and not included in this specification**

(73) Proprietor : **MITSUBISHI RAYON CO., LTD.**
**3-19, Kyobashi-2-chome Chuo-Ku**
**Tokyo (JP)**

(72) Inventor : **Sunano, Katsuaki**
**59, Aza Kamigaito Inokoishi Idakacho**
**Meito-ku Nagoya (JP)**
Inventor : **Matsuda, Yukio**
**2-4-102, Kurokawa-3-chome**
**Ohtake-shi (JP)**

(74) Representative : **TER MEER - MÜLLER - STEINMEISTER & PARTNER**
**Mauerkircherstrasse 45**
**D-8000 München 80 (DE)**

**EP 0 084 782 B2**

## Description

This invention relates to an antifouling coating composition comprising a vehicle containing polymer (A) constituted of at least one monomer represented by the following general formula :

$$CH_2 = \overset{\displaystyle R}{\overset{|}{C}} - COOR' \qquad (I)$$

wherein R is hydrogen or a methyl group and R′ is hydrogen or an alkyl group having 1-12 carbon atoms, or a polymer (A′) constituted of at least one monomer represented by the following general formula :

$$CH_2 = \overset{\displaystyle R}{\overset{|}{C}} - COOR' \qquad (I)$$

wherein R is hydrogen or a methyl group and R′ is hydrogen or an alkyl group having 1-12 carbon atoms, and another vinyl monomer copolymerizable therewith, an antifouling agent and optionally other additives. The antifouling coating composition exhibits a high antifouling performance and excellent coating performances when formed into an antifouling coating film by using a specified vehicle together with a known antifouling agent such as a copper compound (cuprous oxide, copper rhodanate and the like), a sulfur compound (zinc dimethylthiocarbamate, tetramethylthiuram disulfide and the like) or a tin compound (triphenyltin hydroxide, tributyltin oxide and the like) and other additives such as coloring pigment, extender pigment, pigment dispersant, antifoaming agent, levelling agent and plasticizer.

Undersea constructions, piers, buoys, harbor facilities, fishing-nets, ships and the like, which are while being immersed in sea water for a long period of time suffer various damage due to the attachment of marine organisms. In the case of ships, for example, such attachment of marine organisms increases the frictional resistance between the ship's body and the sea water which results in a drop in speed and in increased consumption of fuel. In the case of plants using sea water as cooling water, induction of sea water into cooling pipes is hindered which results in a drop in cooling efficiency. In the case of fishing-nets and particularly fishing-nets for fish farming, the through passage of sea water is hindered which results in oxygen starvation of the cultured fish and their growth is retarded.

With the aim of preventing such attachment of marine organism, there have hitherto been developed the insoluble matrix types of antifouling coating materials using chlorinated rubber, vinyl chloride resin or the like as a vehicle and soluble matrix types of antifouling coating materials using highpolymeric organotin compound such as tributyltin methacrylate or the like as a vehicle. And antifouling coating materials having unique antifouling performance are commercialized depending on the kind and amount of such antifouling agent as mentioned above. However, when used as a ship bottom antifouling paint, the former is undesirable in that, after the dissolution of the antifouling agent into sea water, the surface of coated film becomes porous to increase the frictional resistance between the sea water and the ship body. On the other hand, in the case of the latter, the coated film also dissolves and diffuses into the sea water simultaneously with the dissolution of antifouling agent and the surface of the coated film is smoothed by the grinding action of the sea water, so that the frictional resistance between the sea water and the ship's body does not increase. However, due to the hydrolyzability of the high-polymeric organotin compound used as a vehicle by sea water, the coated film undergoes cracking, breaking and peeling upon exposure to strong ultraviolet rays at sea, particularly in the neighborhood of the water line.

FR-A-22 27 304 discloses a water-based antifouling coating composition comprising a vehicle being a homopolymer or a copolymer of acrylic acid, methacrylic acid or esters thereof with alcohols comprising 1 to 12 carbon atoms, a specific triorgano tin compound as antifouling agent and additional additives, if necessary. While it is generally stated that the properties of the vehicle may be modified by using copolymers or terpolymers of one or more esters of acrylic acid or methacrylic acid with monomers providing homopolymers having a relatively low second order transition temperature, such as vinylacetate, there is no information whatsoever as to the glass transition temperature and the weight average molecular weight of the copolymers obtainable thereby or used.

GB-A-13 03 178 relates to a hydrophilic polymer coating for underwater structures comprising a hydrophilic acrylic resin capable of absorbing at least 20 % of water and an antifouling agent. The hydrophilic acrylic resin is a polymer of a hydroxyalkyl or hydroxyalkylalkoxyalkyl acrylate or methacrylate or of an acrylamide, a N-alkylacrylamide, a methacrylamide, a N-alkylmethacrylamide or a diacetone acrylamide.

US-A-37 92 000 describes an antifouling composition comprising an elastomer A, a resin B and a tin antifouling agent contained in a specific ratio. It is disclosed that with a matrix material having glass transition temperatures significantly below ambient temperature the loss rate of the coating is excessive and fouling occurs very quickly. Therefore the composition is characterized in that the elastomer A has a glass transition temperature below ambient temperature and resin B has a glass transition temperature

above ambient temperature and being selected from polyurethane, acrylonitrile-butadiene copolymers, neoprene, natural rubber, high cis polyisoprene and high cis polybutadiene and polyvinyl chloride, polyvinyl chloride copolymers and chlorinated natural rubber, respectively.

H. Rauch-Puntigam and T. Völker describe in « Acryl- und Methacrylverbindungen », Springer-Verlag, 1967, page 303, the acrylic polymerization in solvent and mention, that the most suitable molecular weight for acrylic lacquer resins is between 40 000 and 140 000.

In « Methoden der organischen Chemie », Houben-Weyl, volume XIX/I, fourth edition (1961), « Makromolekulare Stoffe », part. 1, page 1046, it is mentioned, that for reducing the molecular weight from above $10^5$ additional regulators may be used such as mercaptanes.

The EP-A-0 003 389 describes a process for coating underwater surfaces with wax and coating compositions thus applied. The coating compositions used for this process comprise an aqueous liquid-solid dispersion or liquid-liquid emulsion of a wax containing 1 to 25 wt.-% of a copolymer of methyl methacrylate and butyl acrylate as an additional component. The molar proportions of methyl methacrylate and butyl acrylate in the copolymer A from 60 : 40 to 40 : 60.

The JP-A-81/81 321 discloses an antifouling emulsion composition for water resistant coating comprising an acrylic copolymer obtained by emulsion polymerization of acrylate esters in the present of an unsaturated sulphonic acid or sulfate as comonomer-emulsifier.

The JP-A-79/37 008 describes copolymers for antifouling coating materials comprising 1 to 10 parts hydroxyalkyl(meth)acrylate and 90 to 9 parts of alkyl acrylate and alkylmethacrylate. The copolymers can be used as film-forming material for antifouling paint.

The JP-A-80/92 774 discloses antifouling coating compositions for fiber-reinforced plastic ship hulls containing acrylic polymer vehicles. The resins have a glass transition temperature above 0 °C.

In Chemical Abstracts, vol. 96, 1962 (124 783 j), page 114, it is mentioned, that the antifouling paint comprises butylacrylate-methylmethacrylate-styrene-copolymer, a lime rosin, an antifouling agent and assistant antifouling agents containing ZnO, DDT and copper naphthoate.

An antifouling coating has now been found with which the frictional resistance between sea water and the ship's body can be decreased. The surface of the coated film, is prevented after dissolution of antifouling agent into sea water, from the phenomenon of becoming porous which is a problem with conventional insoluble matrix type of antifouling coating materials and the surface of the film is kept smooth to at least the same extent as in the soluble matrix type of antifouling coating materials. At the same time the cracking, breaking and peeling of coated film upon exposure to ultraviolet rays which is the fault of soluble matrix type of antifouling coating materials can be overcome.

The object of the invention is an antifouling coating composition comprising a vehicle containing a polymer (A) constituted of at least one monomer represented by the following general formula :

$$CH_2 = \overset{R}{\overset{|}{C}} - COOR' \qquad (I)$$

wherein R is hydrogen or a methyl group and R′ is hydrogen or an alkyl group having 1-12 carbon atoms, or a polymer (A′) constituted of at least one monomer represented by the following general formula :

$$CH_2 = \overset{R}{\overset{|}{C}} - COOR' \qquad (I)$$

wherein R is hydrogen or a methyl group and R′ is hydrogen or an alkyl group having 1-12 carbon atoms, and another vinyl monomer copolymerizable therewith, an antifouling agent and optionally other additives characterized in that said vehicle consists of an organic solution containing said polymer (A) or said polymer (A′), having a glass transition temperature of — 30 °C to 0 °C and a weight average molecular weight falling into the range of 20,000-200,000 as main polymer component, optionally in admixture with a chlorinated rubber or a vinyl chloride resin.

As the monomer represented by the above-mentioned general formula (I), any monomers can be used in this invention, so far as polymer constituted thereof has a glass transition temperature and a weight average molecular weight defined above. Among them, however, preferable are acrylic esters such as ethyl acrylate and butyl acrylate and methacrylic esters such as methyl methacrylate and ethyl methacrylate. As said vinyl monomer copolymerizable therewith, methacrylic acid derivatives such as 2-hydroxyethyl methacrylate and dimethylaminoethyl methacrylate are preferable.

The ratio of said compound represented by general formula (I) :

$$CH_2 = \overset{R}{\overset{|}{C}} - COOR' \qquad (I)$$

to said other vinyl monomer copolymerizable therewith, constituting the above-mentioned polymer (A′), is

in the range of 100-80 % by weight of the former per 0-20 % by weight of the latter, and preferably 100-90 % by weight of the former per 0-10 % by weight of the latter. Most preferably, the ratio of the latter monomer is up to 7 % by weight.

Through the vehicle of this invention may be constituted of polymer (A) or (A') only, it may also be a mixture with known vehicles such as chlorinated rubber, vinyl chloride resin and the like.

By adjusting the glass transition temperature ($T_g$) (as referred to in the invention, $T_g$ is a value calculated from the following empirical equation: $1/T_g = \Sigma W_n/T_{gn}$, wherein $T_g$ is the glass transition temperature (absolute temperature) of polymer (A), $W_n$ is weight fraction of n monomer and $T_{gn}$ is the glass transition temperature (absolute temperature) of the homopolymer of n monomer) of polymer (A) and polymer (A') to — 30 °C to 0 °C, or a temperature generally lower than sea water temperature throughout one year, the coating film itself after dissolution of the antifouling agent, which is considered to become porous temporarily, becomes able to readily undergo a deformation along the flow of sea water owing to the resistance between ship body and sea water and thereby to acquire a smoothness at least comparable to the smoothness of the coating film just after being coated. If $T_g$ is adjusted to a temperature higher than 0 °C, the resulting coating film is inferior in smoothness and antifouling performance. If it is adjusted to a temperature lower than — 30 °C, the resulting coating film is impractically inferior in tack and strength.

If weight average molecular weight, measured by high speed liquid chromatography (GPC), of polymer (A) is adjusted to 20,000-200,000, smoothness of coating film is heightened, and it becomes possible to obtain a coating film excellent in weather resistance to ultraviolet rays in the neighborhood of water line and free from cracking, breaking and peeling. Adjustment of the weight average molecular weight to a value smaller than 20,000 or a value greater than 200,000 is both impractical in point of strength of coating film in the former case and in point of coating workability in the latter case.

Next, this invention will be illustrated more concretely with reference to the following examples and comparative examples which are not presented in any way as limitative way.

## Example 1

Into a flask equipped with a reflux condenser, a thermometer, a stirrer and a monomer dropping device was charged 1,200 g of xylene. While keeping the inner temperature of the flask at 90-100 °C, a mixed solution consisting of 400 g of ethyl methacrylate, 100 g of 2-hydroxyethyl methacrylate, 1,500 g of ethyl acrylate and 3 g of benzoyl peroxide was dropped thereinto over a period of 4 hours. After the mixture had been completely dropped, into the flask each 5 g of benzoyl peroxide was added three times (total 15 g) at a time interval of 2 hours to complete the polymerization reaction, while keeping the inner temperature of the flask still at 90-100 °C. Then, the flask was cooled to an ambient temperature and 800 g of xylene was added. Thus, there was obtained a solution of a resin having a weight average molecular weight of 60,000 and $T_g$ of — 2 °C.

## Example 2

The same apparatus as in Example 1 was used. After charging 1,200 g of xylene into the flask, a mixed solution consisting of 360 g of methyl methacrylate, 40 g of dimethylaminoethyl methacrylate, 1,600 g of ethyl acrylat and 3 g of benzoyl peroxide was dropped into the flask over a period of 4 hours while keeping the inner temperature of the flask at 90-100 °C. After the mixture had been completely dropped into the flask, each 5 g of benzoyl peroxide was added three times (total 15 g) at a time interval of 2 hours to complete the polymerization reaction, while keeping the inner temperature of the flask at 90-100 °C. Then, the flask was cooled to an ambient temperature and 800 g of xylene was added. Thus, there was obtained a solution of a resin having a weight average molecular weight of 65,000 and $T_g$ of — 2 °C.

## Example 3

The same apparatus as in Example 1 was used. After charging 1,200 g of xylene into the flask, a mixed solution consisting of 400 g of ethyl methacrylate, 100 g of 2-hydroxyethyl methacrylate, 1,500 g of ethyl acrylate and 3 g of benzoyl peroxide was dropped into the flask over a period of 4 hours, while keeping the inner temperature of the flask at 90-100 °C. After the mixture had been completely dropped, into the flask, each 5 g of benzoyl peroxide was added three times (total 15 g) at a time interval of 2 hours to complete the polymerization reaction, while keeping the inner temperature of the flask still at 90-100 °C. Then, the flask was cooled to an ambient temperature and 600 g of xylene was added. Thus, there was obtained a solution of a resin having a weight average molecular weight of 45,000 and $T_g$ of — 2 °C.

## Example 4

The same apparatus as in Example 1 was used. After charging 1,200 g of xylene into the flask, a mixed solution consisting of 1,500 g of methyl methacrylate, 500 g of butyl acrylate and 3 g of benzoyl peroxide was dropped into the flask over a period of 4 hours, while keeping inner temperature of the flask at 90-100 °C. After the mixture had been completely dropped into the flask, each 5 g of benzoyl peroxide was added at a time interval of 2 hours to complete the polymerization reaction, while keeping the inner temperature of the flask at 90-100 °C. Then the flask was cooled, and 800 g of xylene was added. Thus, there was obtained a solution of a resin having a weight average molecular weight of 75,000 and $T_g$ of — 20 °C.

Example 5

The same apparatus as in Example 1 was used. After charging 1,200 g of xylene into the flask, a mixed solution consisting of 360 g of methyl methacrylate, 40 g of dimethylaminoethyl methacrylate, 1,600 g of ethyl acrylate and 31 g of benzoyl peroxide was dropped thereinto over a period of 4 hours, while keeping the inner temperature of the flask at 90-100 °C. After the mixture had been completely dropped, into the flask each 5 g of benzoyl peroxide were added three times (total 15 g) at a time interval of 2 hours, while keeping the inner temperature of the flask at 90-100 °C, to complete the polymerization reaction. Then, the flask was cooled to an ambient temperature, and 800 g of xylene was added. Thus, there was obtained a solution of a resin having a weight average molecular weight of 65,000 and $T_g$ of — 2 °C.

Comparative Example 1

The same apparatus as in Example 1 was used. After charging 1,200 g of xylene into the flask, a mixed solution consisting of 800 g of methyl methacrylate, 1,000 g of butyl acrylate, 200 g of styrene and 10 g of benzoyl peroxide was dropped thereinto over a period of 4 hours, while keeping the inner temperature of the flask at 90-100 °C. After the mixture had been completely dropped, into the flask, each 5 g of benzoyl peroxide was added three times (total 15 g) at a time interval of 2 hours to complete the polymerization, while keeping the inner temperature of the flask at 90-100 °C. Then the flask was cooled to an ambient temperature and 800 g of xylene was added. Thus, there was obtained a solution of a resin having a weight average molecular weight of 85,000 and $T_g$ of 10 °C.

Comparative Example 2

The same apparatus as in Example 1 was used. After charging 1,200 g of xylene into the flask, a mixed solution consisting of 400 g of ethyl methacrylate, 400 g of ethyl acrylate, 1,100 g of butyl acrylate, 100 g of 2-hydroxyethyl methacrylate and 20 g of benzoyl peroxide was added over a period of 6 hours, while keeping the inner temperature of the flask at 100-120 °C. After the mixture had been added completely, into the flask, each 2 g of benzoyl peroxide was added four times at a time intervals of one hour to complete the polymerization reaction, while keeping the inner temperature of the flask at 110-120 °C. Then, the flask was cooled to an ambient temperature and 800 g of xylene was added. Thus, there was obtained a solution of a resin having a weight average molecular weight of 15,000 and $T_g$ of — 10 °C.

Comparative Example 3

A commercially available insoluble matrix type of antifouling paint using chlorinated rubber as vehicle was used.

Comparative Example 4

A commercially available soluble matrix type of antifouling paint using a high-polymeric organotin compound as vehicle was used.

To 400 g of the above-mentioned resin solution were added 250 g of cuprous oxide, 70 g of triphenyltin hydroxide, 30 g of red iron oxide, 30 g of zinc white, 10 g of pigment dispersant and 210 g of xylene, and the resulting mixture was kneaded by means of a ball mill to prepare an antifouling coating material. The antifouling coating material was coated on an iron plate, previously coated with vinyl type ship bottom paint No. 1, twice by means of a brush so as to give a coating weight of 200 g/m², after which it was dried for 24 hours to prepare a test piece. The test piece was immersed in sea water for one year at the sea of Otake City, Hiroshima Prefecture, Japan. Further, a part of the test piece was kept in the same state as at the water line of ships.

The results of the tests in Examples 1-5 and Comparative Examples 1-4 are summarized in Table 1.

(See Table 1 page 6)

Table 1

| | Duration of immersion (months) | Antifouling property | Smoothness | State of coating film |
|---|---|---|---|---|
| Example 1 | 6<br>12 | ◎<br>◎ | ◎<br>◎ | ◎<br>◎ |
| " 2 | 6<br>12 | ◎<br>◎ | ◎<br>◎ | ◎<br>◎ |
| " 3 | 6<br>12 | ◎<br>◎ | ◎<br>◎ | ◎<br>◎ |
| " 4 | 6<br>12 | ◎<br>◎ | ◎<br>Δ | ◎<br>◎ |
| " 5 | 6<br>12 | ◎<br>◎ | ◎<br>Δ | ◎<br>◎ |
| Comparative Example 1 | 6<br>12 | ◎<br>○ | Δ<br>Δ | ◎<br>◎ |
| " 2 | 6<br>12 | ◎<br>◎ | ◎<br>◎ | Crack<br>Crack |
| Comparative Example 3 | 6<br>12 | Δ<br>× | ×<br>× | ◎<br>◎ |
| " 4 | 6<br>12 | ◎<br>◎ | ◎<br>◎ | Crack<br>Crack |

Antifouling property :
- ⊙ : No attachment
- ○ : Amount of attachment 5-10 %
- Δ : Amount of attachment 11-50 %
- x : Amount of attachment more than 50 %

Smoothness :
- ⊙ : Comparable or superior to unimmersed coated film in smoothness
- Δ : A little inferior to unimmersed coated film in surface smoothness
- x : Inferior to unimmersed coated film in surface smoothness

State of coating film :
- ⊙ : No cracking detected.
- Crack : Cracking detected.

## Claims

An antifouling coating composition comprising a vehicle containing a polymer (A) constituted of at least one monomer represented by the following general formula :

$$CH_2 = \overset{R}{\overset{|}{C}} - COOR' \qquad (I)$$

wherein R is hydrogen or a methyl group and R' is hydrogen or an alkyl group having 1-12 carbon atoms, or a polymer (A') constituted of at least one monomer represented by the following general formula :

$$CH_2 = \overset{R}{\overset{|}{C}} - COOR' \qquad (I)$$

wherein R is hydrogen or a methyl group and R' is hydrogen or an alkyl group having 1-12 carbon atoms, and another vinyl monomer copolymerizable therewith, and antifouling agent and optionally other additives characterized in that said vehicle consists of an organic solution containing said polymer (A) or said polymer (A'), having a glass transition temperature of —30 °C to 0 °C and a weight average molecular weight falling in the range of 20,000-200,000 as main polymer component, optionally in admixture with a chlorinated rubber or a vinyl chloride resin.

2. The antifouling coating composition according to Claim 1, wherein R' in said general formula :

$$CH_2 = \overset{R}{\overset{|}{C}} - COOR'$$

is hydrogen, a methyl group, an ethyl, group or a butyl group.

3. An antifouling coating composition according to Claim 1, wherein said vinyl monomer is styrene.

## Patentansprüche

1. Bewuchsverhindernde Anstrichzusammensetzung, enthaltend ein Bindemittel, das ein Polymer (A), das aus mindestens einem Monomer der allgemeinen Formel :

$$CH_2 = \overset{R}{\overset{|}{C}} - COOR' \qquad (I)$$

gebildet ist, worin R ein Wasserstoffatom oder eine Methylgruppe und R' ein Wasserstoffatom oder eine Alkylgruppe mit 1 bis 12 Kohlenstoffatomen bedeuten, oder ein Polymer (A') enthält, das aus mindestens einem Monomer der allgemeinen Formel :

$$CH_2 = \overset{R}{\overset{|}{C}} - COOR' \qquad (I)$$

worin R ein Wasserstoffatom oder eine Methylgruppe und R' ein Wasserstoffatom oder eine Alkylgruppe mit 1 bis 12 Kohlenstoffatomen bedeuten, und einem anderen, damit copolymerisierbaren Vinylmonomer gebildet ist, ein bewuchsverhinderndes Mittel und wahlweise weitere Zusätze, dadurch gekennzeichnet, daß das Bindemittel aus einer organischen Lösung besteht, das als Haupt-Polymerbestandteil das Polymer (A) oder das Polymer (A'), die eine Glasumwandlungstemperatur von —30 °C bis 0 °C und ein gewichtsmittleres Molekulargewicht im Bereich von 20.000 bis 200.000 aufweisen, wahlweise in Mischung mit einem chlorierten Kautschuk oder einem Vinylchloridharz enthält.

2. Bewuchsverhindernde Anstrichzusammensetzung nach Anspruch 1, dadurch gekennzeichnet, daß R' in der allgemeinen Formel

$$CH_2 = \overset{R}{\overset{|}{C}} - COOR'$$

ein Wasserstoffatom, ein Methylgruppe, eine Ethylgruppe oder eine Butylgruppe bedeutet.

3. Bewuchsverhindernde Anstrichzusammensetzung nach Anspruch 1, dadurch gekennzeichnet, daß das Vinylmonomer Styrol ist.

## Revendications

1. Une composition de revêtement contre les salissures marines comprenant un véhicule contenant un polymère (A) constitué par au moins un monomère représenté par la formule générale suivante :

$$CH_2 = \overset{\overset{\displaystyle R}{|}}{C} - COOR' \qquad (I)$$

dans laquelle R est l'hydrogène ou un groupe méthyle et R' est l'hydrogène ou un groupe alkyle comptant 1 à 12 atomes de carbone, ou un polymère (A') constitué par au moins un monomère représenté par la formule générale suivante :

$$CH_2 = \overset{\overset{\displaystyle R}{|}}{C} - COOR' \qquad (I)$$

dans laquelle R est l'hydrogène ou un groupe méthyle et R' est l'hydrogène ou un groupe alkyle comptant 1 à 12 atomes de carbone, et un autre monomère vinylique copolymérisable avec celui-ci, un agent contre les salissures marines et facultativement d'autres additifs, caractérisée en ce que ledit véhicule consiste en une solution organique contenant ledit polymère (A) ou ledit polymère (A'), ayant une température de transition vitreuse de — 30 °C à 0 °C et un poids moléculaire moyen en poids dans la gamme de 20 000 à 200 000 comme principal composant polymère, facultativement en mélange avec un caoutchouc chloré ou une résine de chlorure de vinyle.

2. La composition de revêtement contre les salissures marines selon la revendication 1, dans laquelle R', dans ladite formule générale :

$$CH_2 = \overset{\overset{\displaystyle R}{|}}{C} - COOR'$$

est l'hydrogène, un groupe méthyle, un groupe éthyle ou un groupe butyle.

3. Une composition de revêtement contre les salissures marines selon la revendication 1, dans laquelle ledit monomère vinylique est le styrène.